# EUROPEAN PATENT APPLICATION

(11) **EP 4 703 855 A1**
(43) Date of publication of application: **04.03.2026**
(21) Application number: 24797017.1
(22) Date of filing: 23.04.2024
(51) Int. Cl.: G06F 3/041, G06F 3/044

(54) **TOUCH SENSOR AND DISPLAY DEVICE**

(30) Priority: 24.04.2023 JP 2023070741
(71) Applicant: Kureha Corporation, Chuo-ku Tokyo 103-8552 (JP)
(72) Inventor: TSUDA, Takuya, Tokyo 103-8552 (JP)
(74) Representative: Hoefer & Partner Patentanwälte mbB
(86) International application number: PCT/JP2024/015922
(87) International publication number: WO 2024/225271

(57) **Abstract**

A touch sensor that is manufactured at low cost and driven with low power consumption is disclosed. A touch sensor according to an aspect of the present invention includes: a first detection conductor made up of divided electrodes having a plurality of electrode portions electrically insulated from each other; a second detection conductor insulated from the first detection conductor or connected to the first detection conductor with high impedance with a resistance equal to or higher than 10 kΩ; and a control unit configured to extract a signal in a commercial power supply frequency band from a signal detected from the first detection conductor with the second detection conductor used as a reference potential, and detect a touch position using the signal in the commercial power supply frequency band.

## Description

### [TECHNICAL FIELD]

The present invention relates to a touch sensor and a display device.

### [BACKGROUND ART]

A touch panel is widely used in a small portable device, various terminals, and the like. Normally, the touch panel includes a sensor that detects position coordinates pointed by using a finger, a pen, or the like or the presence or absence of a pointing operation, and a surface display device such as a liquid crystal display.

As a detection method of such a sensor, a surface-type capacitance method, a resistive film method, an infrared method, an ultrasonic surface acoustic wave method, an electromagnetic induction method, and the like are known. For example, Patent Document 1 discloses a surface-type capacitive sensor.

The surface-type capacitive sensor includes a stacked body including an insulating substrate, a uniform conductive layer formed on a surface of the insulating substrate, and a thin insulating layer (protective layer) formed on an upper surface of the conductive layer. The operating principle of this sensor is as follows. 1) An alternating current voltage is applied to four corners of the conductive layer to form a uniform electric field. 2) When a finger touches the conductive layer, a weak current flows through the finger via a capacitance formed by the conductive layer and the finger. 3) This current flows from each of the four corners of the conductive layer to the point touched (contacted) by the finger. 4) Then, the signal processing circuit measures the ratio between the current amounts of the terminals at the four corners to calculate the coordinates of the touch position of the finger.

A surface-type capacitive sensor has a simple structure, can be manufactured at low cost, and is relatively easy to increase in size, and thus is widely employed in touch panels.

### [CITATION LIST]

### [PATENT DOCUMENT]

Patent Document 1: JP 2010-262626 A

### [SUMMARY OF INVENTION]

### [TECHNICAL PROBLEM]

However, since the detection method of the surface-type capacitive sensor is a method of detecting a touch position by applying an alternating current voltage to generate a weak electric field on a substrate surface, and capturing a change in capacitance due to a touch through four electrodes, it is difficult to further reduce circuit cost and power consumption.

Therefore, it is desired to develop a new type of touch sensor that has a simple structure, can simplify a detection-signal processing circuit, and has low driving power consumption of the sensor.

In view of the above, an object of the present invention is to provide a touch sensor that is manufactured at low cost and is driven with low power consumption.

### [SOLUTION TO PROBLEM]

A touch sensor according to an aspect of the present invention includes: a first detection conductor made up of divided electrodes having a plurality of electrode portions electrically insulated from each other; a second detection conductor insulated from the first detection conductor or connected to the first detection conductor with high impedance with a resistance equal to or higher than 10 kΩ; and a control unit configured to extract a signal in a commercial power supply frequency band from a signal detected from the first detection conductor with the second detection conductor used as a reference potential, and detect a touch position using the signal in the commercial power supply frequency band.

### [ADVANTAGEOUS EFFECTS OF INVENTION]

According to an aspect of the present invention, a touch sensor that is manufactured at low cost and driven with low power consumption can be provided.

### [BRIEF DESCRIPTION OF THE DRAWINGS]

FIG. 1 is an external perspective view of an exemplary display device having a touch sensor according to an embodiment of the present invention.
FIG. 2A is a side cross-sectional view of the exemplary display device according to the present embodiment.
FIG. 2B is a side cross-sectional view of the exemplary display device according to a modification of the present embodiment.
FIG. 3 is an explanatory diagram for explaining a configuration of the exemplary display device according to the present embodiment.
FIG. 4 is an explanatory diagram for explaining an example of processing of a signal processing unit of the exemplary display device according to the present embodiment.
FIG. 5 is a diagram illustrating an example of filter frequency characteristics of a filter used to extract a signal of a commercial power supply frequency band component of the exemplary display device according to the present embodiment.
FIG. 6 is a diagram illustrating an example of a digital signal after the signal processing unit processes the signal detected from the electrode touched by the finger.
FIG. 7 is a diagram illustrating an example of a digital signal after the signal processing unit processes the signal detected from the electrode that is not touched by the finger and adjacent to the electrode touched by the finger.
FIG. 8 is a diagram illustrating a signal-B in each of FIGS. 6 and 7 with respect to time on the horizontal axis.
FIG. 9 is a diagram illustrating a signal obtained by performing fast Fourier transform (FFT) on a section from 1.00 second to 1.25 seconds in FIG. 8.

### [DESCRIPTION OF EMBODIMENTS]

### Underlying Knowledge Forming Basis of the Present Invention

Electrical noise is routinely generated around us from AC power supply lines and electronic devices. Such electrical noise may include hum or humming noise. The hum noise becomes a current when an electromagnetic wave generated by the amplitude of a commercial AC power supply collides with a conductor, and is detected as electrical noise.

The hum noise is a noise component dependent on a commercial power supply frequency, and is known as being mixed at the time of measuring a minute bioelectric signal from an electrode attached to a surface of a human body, for example.

Here, the commercial power supply frequency means a power supply frequency of an alternating current supplied as a commercial power supply. The commercial power supply frequency may vary depending on countries or regions. For example, the commercial power supply frequency in Japan is 50 Hz or 60 Hz. The hum noise may be referred to as commercial power supply frequency noise, commercial power supply frequency-dependent noise, or the like.

As a result of intensive studies, the present inventor has found that the presence or absence of a touch by a finger can be detected by using hum noise. Therefore, an embodiment for detecting a touch position using hum noise will be described below.

### Related Art

Prior to describing an embodiment of the present invention, a related art will be described. As a related art, a touch sensor using hum noise is disclosed in "One touch calibration of hum-noise-based touch sensor, HumTouch" by Tzu-Hsuan HSIA et al., 22nd Lecture Meeting in System Integration Department (SI2021) (December 15 to 17, 2021).

The touch position detection method of this touch sensor is similar to the position detection method of the surface-type capacitive sensor described above. Specifically, in this method, electrodes are provided around a panel, and a touch position is detected from a difference in voltage detected by each electrode.

When this method is used, in a case where the resistance of the touch panel is too low, the difference between the voltage signals detected by the respective electrodes is small, and there is a concern that the position detection accuracy may decrease. On the other hand, when the resistance is too high, since the hum noise is a weak current, it is difficult to detect a signal in each electrode.

Further, in the disclosed touch panel, the resistance becomes nonuniform depending on the location due to the non-uniformity of the material. Furthermore, the situation where noise is generated differs depending on the individual difference of the human body, and therefore, there is a possibility that this method may not secure the position detection accuracy.

Hereinafter, embodiments of the present invention will be described in detail with reference to the drawings as appropriate. However, an unnecessarily detailed description may be omitted. For example, detailed description of already well-known matters and redundant description of substantially the same configuration may be omitted. This is to avoid unnecessarily redundant descriptions and to facilitate understanding for those skilled in the art.

The accompanying drawings and the following descriptions are provided for those skilled in the art to fully understand the present invention, and are not intended to limit the subject matter described in the appended claims. It should be noted that the elements illustrated in the various figures are not necessarily drawn to scale.

### Embodiment

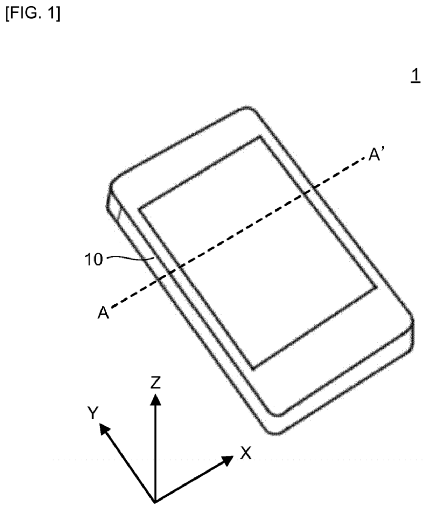

FIG. 1 is an external perspective view of an exemplary display device having a touch sensor according to an embodiment of the present invention. Examples of this display device include various devices having a touch detection function, such as a mobile personal computer (PC), a tablet terminal, a smartphone, and a digital camera.

As illustrated in FIG. 1, a display device 1 includes a housing 10 having a substantially rectangular parallelepiped shape. The front surface side (the positive side in the Z direction) of the housing 10 is open. In the present specification and the drawings, a width direction (lateral direction) of the housing 10 is referred to as an X direction, a length direction (longitudinal direction) is referred to as a Y direction, and a thickness direction is referred to as a Z direction (the X axis, the Y axis, and the Z axis are orthogonal to each other). In the present embodiment, the length of the housing 10 in the X direction is shorter than the length of the housing 10 in the Y direction. However, the length in the X direction and the length in the Y direction may be equal, or the length in the X direction may be greater than the length in the Y direction.

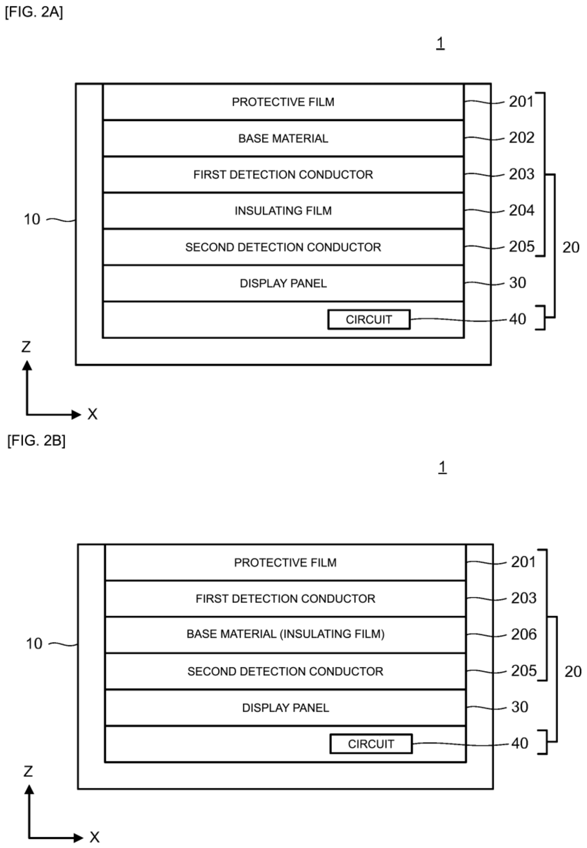

FIG. 2A is a side cross-sectional view of the exemplary display device according to the present embodiment when cut along the A-A' plane parallel to the XZ plane.

As illustrated in FIG. 2A, a stacked body 201 to 205 and various circuits 40 constituting a touch sensor 20, and a display panel 30 are disposed in the housing 10. The stacked body 201 to 205, the display panel 30, and the various circuits 40 are disposed in this order along the Z direction from the open surface (display surface) side (positive side in the Z-axis direction) of the housing 10. The touch sensor 20 may be referred to as a touch input device. All or some of the circuits 40 may be referred to as a control unit or a control circuit.

As illustrated in FIG. 2A, the touch sensor 20 includes a protective film (protective layer) 201, a base material 202, a first detection conductor 203, an insulating film 204, and a second detection conductor 205. In the present embodiment, in order to perform the touch position detection with higher sensitivity, the first detection conductor 203 is disposed on the open surface side of the housing 10 (that is, closer to the surface to be touched by the finger), and the second detection conductor 205 is disposed on the negative side in the Z-axis direction relative to the first detection conductor 203, so that higher commercial power supply frequency noise is detected.

The protective film 201 is made of glass, has an insulating property, and has a thickness of about 1 mm (1.1 mm in the present embodiment). The protective film 201 is present on the outermost layer of the open surface, and is disposed on substantially the entire surface of the base material 202 on the open surface side of the housing 10. The protective film 201 serves as an operation surface of the display device 1 and the touch sensor (touch input device). Note that the protective film 201 may be made of a transparent organic material such as an epoxy resin, an inorganic material such as glass, or a mixture thereof.

The base material 202 is disposed on substantially the entire surface of the surface of the protective film 201 opposite to the open surface of the base material 202. The base material 202 is an insulating material having a rectangular flat plate shape, and is made of a material having transparency. In the present embodiment, the base material 202 is made of polyethylene terephthalate (PET). Note that as the base material, a known transparent film can be adopted, and although not particularly limited, PET, polycarbonate, cycloolefin polymer (COP), and the like are preferably used.

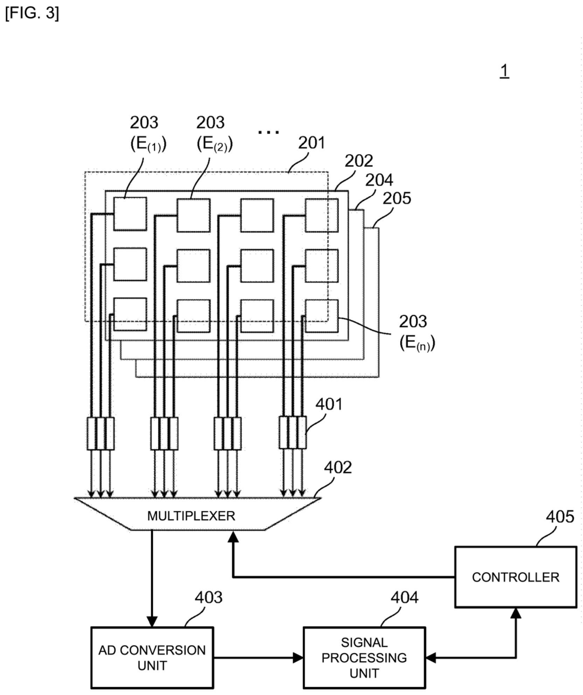

The first detection conductor 203 is disposed on a surface of the base material 202 opposite to a surface in contact with the protective film 201. As described with reference to FIG. 3, the first detection conductor 203 includes a plurality of electrodes. The plurality of electrodes constituting the first detection conductor 203 are arranged in a matrix at intervals along each of the X direction and the Y direction. The first detection conductor 203 is connected to a measurement circuit (including an amplification unit 401, a multiplexer 402, an analog-to-digital (AD) conversion unit 403, and a signal processing unit 404, which will be described later). Hum noise can be detected when a human body is in direct contact with or in proximity to the first detection conductor 203 (electrode).

The first detection conductor 203, whose base material is a PET film, uses an electrode containing indium tin oxide (ITO) as a main component. Note that other than ITO, an inorganic electrode of zinc oxide (ZnO), a silver nanowire, a carbon nanotube, graphene, or the like, or an organic electrode containing polythiophene, polyaniline, or the like as a main component may be used. By using these materials, a conductor pattern having high transparency can be formed.

The insulating film 204 has a rectangular flat plate shape having substantially the same size as the base material 202, and is disposed on the surface of the first detection conductor 203 on the side opposite to the open surface side of the housing 10. Note that the insulating film 204 is preferably made of PET, PC, or COP, but may be made of glass, epoxy resin, or the like.

The second detection conductor 205 has a rectangular flat plate shape having substantially the same size as the base material 202 and the insulating film 204, and is disposed on substantially the entire surface of the insulating film 204 on the side opposite to the open surface side of the housing 10. Note that the shape and area of the second detection conductor 205 can be set as necessary, and the position of the second detection conductor 205 is not particularly limited as long as the second detection conductor 205 is at such a location as to serve as a reference potential.

The second detection conductor 205 is formed of one ITO electrode.

It is desirable that the second detection conductor 205 is connected to the ground potential of a measurement circuit board or a fixed potential having a certain offset voltage from the ground potential to be set as a reference potential (for example, the ground or earth of the display device 1 can also be used). By setting the second detection conductor 205 to the reference potential in this manner, detection signals output via the first detection conductor 203 and the second detection conductor 205 are used for the touch position detection.

Note that the configuration of the stacked body constituting the touch sensor 20 is not limited to the configuration illustrated in FIG. 2A. Hereinafter, a modification example of the stacked body constituting the touch sensor 20 will be described.

FIG. 2B is a side cross-sectional view of the exemplary display device 1 according to a modification of the present embodiment. In the present modification, as illustrated in FIG. 2B, the touch sensor 20 includes the protective film (protection layer) 201, the first detection conductor 203, a base material (insulating film) 206, and the second detection conductor 205. The first detection conductor 203 is obtained by forming a conductor pattern on the base material 206. As described above, the arrangement of the base material 202 and the first detection conductor 203 illustrated in FIG. 2A may be changed by vertically interchanging the base material 202 and the first detection conductor 203 to the arrangement of the base material 206 and the first detection conductor 203 illustrated in FIG. 2B. In other words, in the Z direction, the first detection conductor 203 may be disposed on the positive side, and the base material 206 may be disposed on the negative side. In this case, it is reasonable in the configuration to use the base material 206 as an insulating film as illustrated in FIG. 2B.

Further, the first detection conductor 203 may be obtained by forming a conductor pattern on the protective film 201 of glass or the like.

In the present modification, since the distance between the finger and the first detection conductor 203 is short, the touch position can be detected with higher sensitivity and higher accuracy.

A stacked body (located on the positive side in the Z-axis direction relative to the display panel 30) formed by stacking the protective film 201, the base material 202, the first detection conductor 203, the insulating film 204, and the second detection conductor 205 can have a total light transmittance of 80% or more.

When the finger of the operator of the display device 1 touches the operation surface, a signal from the electrode constituting the first detection conductor 203 and corresponding to the touch position includes commercial power supply frequency noise caused by the proximity of the finger to the electrode. Therefore, by determining the commercial power supply frequency noise, the position of the electrode that is the source of the noise (signal) can be detected as the touch position.

The display panel 30 is formed of a flat panel display having a liquid crystal display element (not illustrated). The display panel 30 includes a liquid crystal panel, a front polarizing plate, a back polarizing plate, and a backlight (none of which is illustrated). The front polarizing plate and the back polarizing plate are disposed so as to sandwich the liquid crystal panel between them. The backlight is disposed on a side opposite to the liquid crystal panel with respect to the back polarizing plate. The display panel 30 overlaps the touch sensor 20 (touch input device) and displays an image. The display panel 30 is not limited to the above-described configuration, and may be any display panel, such as a flat panel display including an organic electro-luminescence (EL) element.

As will be described with reference to FIG. 3, the various circuits 40 include the amplification unit 401 (amplification circuit), the multiplexer 402, the AD conversion unit 403 (AD converter and AD conversion circuit), the signal processing unit 404 (signal processing circuit), and a controller 405, and further include a drive unit (drive circuit; not illustrated) that drives the display panel 30 to control the liquid crystal display element. The various circuits 40 are disposed on the back surface side of the display panel 30. For example, a mounting substrate (not illustrated) is disposed in a space on the back surface side of the display panel 30 in the housing 10, and the various circuits 40 are mounted on the mounting substrate. All or some of the various circuits 40 (for example, the signal processing unit 404 and the controller 405) may be referred to as a control unit or a control circuit.

FIG. 3 is an explanatory diagram for explaining a configuration of the exemplary display device according to the present embodiment.

As described above, the first detection conductor 203 is made up of a plurality of electrodes, and the plurality of electrodes are disposed separately from each other. In the present embodiment, the number of the plurality of electrodes is n, including the electrode E₍₁₎, the electrode E₍₂₎, ..., and the electrode E₍ₙ₎.

The plurality of electrodes E₍₁₎ to E₍ₙ₎ are arranged in a matrix along the X direction and the Y direction when viewed from the Z direction. As described above, each of the electrodes E₍₁₎ to E₍ₙ₎, for example, whose base material is a PET film, is an electrode made of ITO, and having a size of 30 mm x 30 mm. However, the size, position, and shape of the electrode are not limited thereto. For example, the shape of the electrode may be hexagonal. Further, for example, in the case of a flat touch panel to be touched by a finger, the first detection conductor 203 is made up of divided electrodes having a plurality of electrode portions electrically insulated from each other. When the electrodes are disposed so as to cover the entire panel, the finger (indirectly) touches (approaches) one or more of the electrodes, and thus the touch position can be identified.

Each of the plurality of electrodes E₍₁₎ to E₍ₙ₎ outputs (transmits) an analog signal to the amplification unit 401.

The amplification unit 401 amplifies the analog signal input (received) from each of the electrodes E₍₁₎ to E₍ₙ₎ to a range of amplitude that can be measured (0 to 3.3 V in the present embodiment), and outputs the amplified analog signal to the multiplexer 402. The number of amplification units 401 is equal to the number of electrodes.

The multiplexer 402 multiplexes the analog signals input from the electrodes via the multiplexer 402. The multiplexer 402 sequentially outputs an amplified analog signal AS₍₁₎ from the electrode E₍₁₎, an amplified analog signal AS₍₂₎ from the electrode E₍₂₎, ..., and an amplified analog signal AS₍ₙ₎ from the electrode E₍ₙ₎ to the AD conversion unit 403 at a constant interval (cycle) (that is, periodically and repeatedly) according to a selection signal input from the controller 405.

The AD conversion unit 403 converts the (amplified) analog signals AS₍₁₎ to AS₍ₙ₎ input from the multiplexer 402 into digital signals DS₍₁₎ to DS₍ₙ₎, respectively, and sequentially outputs the digital signals DS₍₁₎ to DS₍ₙ₎ to the signal processing unit 404. Here, the output of the digital signals from the AD conversion unit 403 to the signal processing unit 404 is continuously and periodically repeated at a constant cycle (for example, 5 milliseconds), where the digital signal DS₍₁₎ to the digital signal DS₍ₙ₎ are output in one cycle. The sampling frequency at the time of AD conversion is at least twice the commercial power supply frequency.

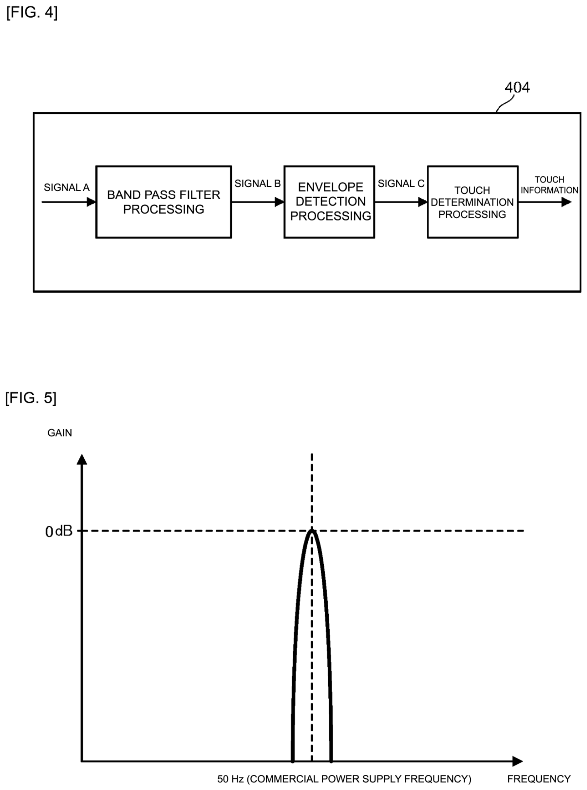

The signal processing unit 404 performs the following processing (band pass filter processing, envelope detection processing, and touch determination processing) on the digital signals input from the AD conversion unit 403 at a constant interval (cycle) (that is, periodically and repeatedly) according to the selection signal input from the controller 405. Hereinafter, the processing of the signal processing unit 404 will be described with reference to FIG. 4 as appropriate. Note that the processing executed by the signal processing unit 404 (or the controller 405) described below may be implemented by hardware, may be implemented by software, or may be implemented by a combination of hardware and software.

### Bandpass Filter Processing

Before the band pass filter processing, first, the signal processing unit 404 performs offset adjustment on the digital signal input from the AD conversion unit 403. The signal processing unit 404 uses a commercial power supply frequency band pass filter (band pass filter; for example, a filter having filter frequency characteristics illustrated in FIG. 5) to extract (a signal of) a commercial power supply frequency component B that has passed through the filter from the digital signal A (after the offset adjustment) input from the AD conversion unit 403. Since other noise such as high-frequency noise can be removed by the band pass filter processing, it is possible to more accurately detect a signal used for touch position detection.

### Envelope Detection Processing

The signal processing unit 404 performs envelope detection processing for the waveform illustrated in FIG. 4 on the signal B of the commercial power supply frequency component extracted as described above to calculate an envelope signal C. Note that a known technique such as Hilbert transform may be used to obtain the envelope signal C.

### Touch Determination Processing

Since a value of the envelope signal C from the touched electrode is larger than that of the envelope signal from an electrode that is not touched, the signal processing unit 404 can determine the presence or absence of a touch for each electrode based on a preset threshold value (touch determination processing illustrated in FIG. 4). For example, the signal processing unit 404 determines, for each electrode, that a period during which the value of the envelope signal C exceeds a predetermined threshold value is a period during which the electrode is touched, and outputs, to the controller 405, a signal (a signal indicating that the electrode is touched) that reaches a high level only during the period during which the electrode is (determined to be) touched.

In the signal processing unit 404, the touch determination processing using envelope detection has been described, but similar touch determination processing can be performed by performing Fourier transform on the obtained signal. When the signal B of the commercial power supply frequency component is continuously cut out for a certain period (frame), and the frame is Fourier transformed, then a spectrum of the piezoelectric signal intensity with respect to the frequency is obtained. In the spectrum, since the intensity at the commercial power supply frequency on the touched electrode is higher than the intensity on the electrode that is not touched, it is possible to determine whether or not each electrode is touched. For example, when the intensity at the commercial power supply frequency on a certain electrode exceeds a predetermined threshold value, it can be determined that the electrode is being touched at the time of measurement.

The controller 405 outputs, to the multiplexer 402, a selection signal for causing the AD conversion unit 403 to sequentially output the amplified analog signals from the respective electrodes. The controller 405 outputs, to the signal processing unit 404, a selection signal for executing the above-described signal processing on each digital signal input from the AD conversion unit 403.

The controller 405 detects the touch position in real time based on the signal input from the signal processing unit 404. Specifically, the controller 405 can identify (that is, detect) the touch position based on the electrode corresponding to the signal indicating the touch determination processing result input from the signal processing unit 404, and the electrode position information (for example, position coordinates) stored in advance in the storage unit.

According to the above embodiment, it is not necessary to apply an alternating current voltage, and the configuration is very simple. Therefore, it is possible to provide a touch sensor and a display device that can be reduced in size (thickness) and can perform touch position detection at low cost and with low power consumption. In addition, since the position detection is performed using the divided electrodes, it is possible to accurately detect a weak signal of hum noise, and it is possible to accurately detect the position while the position detection is not affected by the non-uniformity of the detection conductor or the individual differences.

### Modification

Although it has been described in the above embodiment that the first detection conductor 203 and the second detection conductor 205 are insulated from each other by the insulating film 204, the same effects as those of the above embodiment can be obtained even when the first detection conductor 203 and the second detection conductor 205 are connected to each other with high impedance. In this case, the first detection conductor 203 and the second detection conductor 205 are preferably connected with high impedance with a resistance equal to or higher than 10 kΩ, and more preferably connected with high impedance with a resistance equal to or higher than 100 kΩ.

Although it has been described in the above embodiment that the signal processing unit 404 extracts the signal of the commercial power supply frequency component using the band pass filter, the signal processing unit 404 may extract the signal of the commercial power supply frequency component using a notch filter (a band-cut filter or a band stop filter) to obtain the same effect as that of the above embodiment. In this case, the signal processing unit 404 separates the digital signal (after the offset adjustment) input from the AD conversion unit 403 into a commercial power supply frequency component that does not pass through the filter and a frequency component other than the commercial power supply frequency component having passed through the filter. Then, the signal processing unit 404 can extract (the signal of) the commercial power supply frequency component by subtracting the frequency component other than the commercial power supply frequency component from the digital signal (after the offset adjustment).

Although signal processing is executed by using the band pass filter as a digital filter after digital signal conversion in the above embodiment, the same function can be implemented by using an analog filter instead of the digital filter.

Although the controller 405 has been described as determining the touch position based on the result of the touch determination processing performed by the signal processing unit 404 in the above embodiment, the signal processing unit 404 may determine the touch position based on the result of the touch determination processing and the position information of the electrode stored in advance in the storage unit.

Although the first detection conductor 203 and the second detection conductor 205 have been described and illustrated as having a parallel flat plate shape in the above embodiment, the shape of the first detection conductor 203 and the second detection conductor 205 is not limited to the above shape.

### Touch Position Detection Evaluation

The present inventor manufactured the touch sensor according to the present embodiment and evaluated the touch position detection. In the present touch sensor, the first detection conductor 203 was made up of 12 rectangular electrodes (electrode E₍₁₎ to electrode E₍₁₂₎) disposed so as to be insulated from each other, and the total light transmittance of the stacked body constituting the touch sensor was 80% or more. Where the analog signal AS₍₁₎ to the analog signal AS₍₁₂₎ from the electrode E₍₁₎ to the electrode E₍₁₂₎ were output in one cycle, the signals output from the multiplexer 402 at the sampling frequencies 200 Hz were converted from the analog signals AS₍₁₎ to AS₍₁₂₎ to the digital signals DS₍₁₎ to DS₍₁₂₎ by the AD conversion unit 403, and the digital signals DS₍₁₎ to DS₍₁₂₎ after the AD conversion were input to the signal processing unit 404.

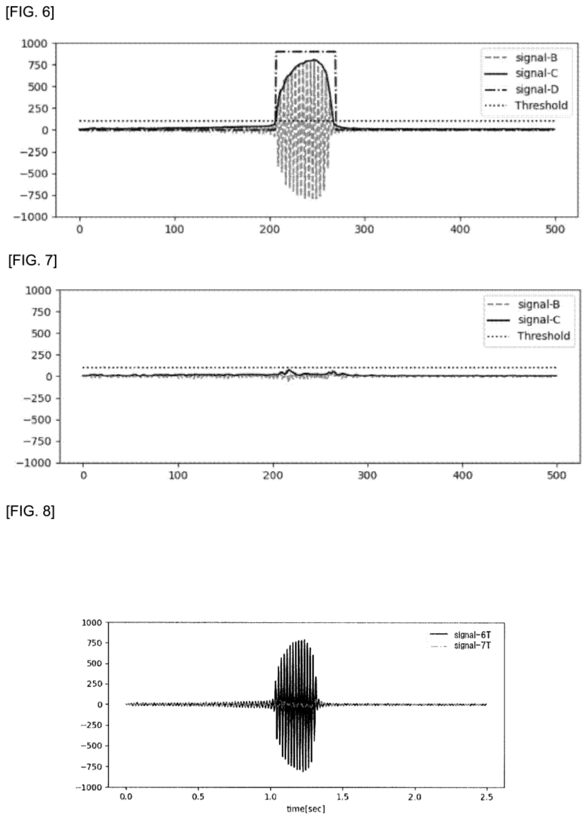

FIG. 6 is a diagram illustrating an example of a digital signal after the signal processing unit 404 processes the signal detected from the electrode touched by the finger. In FIG. 6, a signal B ("signal-B") is a signal of commercial power supply frequency component passing through a commercial power supply frequency band pass filter (band pass filter) for extracting a commercial power supply frequency (50 Hz) from the digital signals after the offset adjustment by the signal processing unit 404. A signal C ("signal-C") is an envelope signal obtained by performing envelope detection processing on a commercial power supply frequency component B (signal B).

In the graph illustrated in FIG. 6, the horizontal axis represents the number of times of sampling n when sampling is performed at a cycle of 5 milliseconds, and the vertical axis represents the voltage signal intensity (intensity 1 is equivalent to 0.8 millivolts).

Since the value of the envelope signal C of the rectangular electrode touched by the finger is larger than the value of the envelope signal of the rectangular electrode not touched by the finger (see FIG. 7 to be described later), the signal processing unit 404 can determine the presence or absence of a touch for each rectangular electrode by performing threshold-based determination on the value of the envelope signal C. In this evaluation, the signal processing unit 404 determined that a period during which the value of the envelope signal C exceeds a threshold value 100 ("Threshold") is a period during which the electrode is touched, and output a signal D ("signal-D") that outputs a high level only during the period during which the electrode is touched.

FIG. 7 is a diagram illustrating an example of a digital signal after the signal processing unit 404 performs the signal processing on the signals detected from the electrode that is not touched by the finger and adjacent to the electrode touched by the finger. In FIG. 7, a signal B ("signal-B") is a signal of commercial power supply frequency components passing through a commercial power supply frequency band pass filter (band pass filter) for extracting a commercial power supply frequency (50 Hz) from the digital signals after the offset adjustment by the signal processing unit 404. A signal C ("signal-C") is an envelope signal obtained by performing envelope detection processing on a commercial power supply frequency component B (signal B). In FIG. 7, since a signal with the commercial power supply frequency is hardly detected, and there is no period during which the value of the envelope signal C exceeds 100 ("Threshold"), the signal processing unit 404 determines that the finger is not touching an electrode during this measuring period.

In this manner, the signal processing unit 404 periodically acquires the information of the rectangular electrode touched by the finger and the rectangular electrode not touched by the finger, and outputs the information to the controller 405, so that the controller 405 can identify (that is, detect) the touch position by referring to the position information of the rectangular electrodes stored in advance in the storage unit.

The controller 405 can detect the touch position in real time based on the information input from the signal processing unit 404.

FIG. 8 is a diagram illustrating the signal-B in each of FIGS. 6 and 7 with respect to time (unit: second) on the horizontal axis. The signal of the touched electrode is referred to as a signal-6T, and the signal of the electrode that is not touched is referred to as a signal-7T.

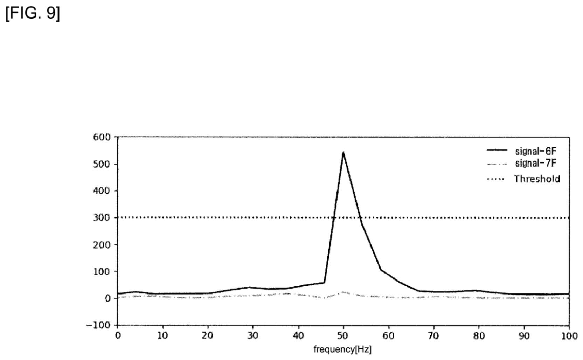

FIG. 9 is a diagram illustrating a signal obtained by performing fast Fourier transform (FFT) on a section from 1.00 second to 1.25 seconds in FIG. 8, and the horizontal axis corresponds to a frequency (unit: Hz). The signal obtained by performing FET on the signal-6T is denoted as a signal-6F, and the signal obtained by performing FET on the signal-7T is a denoted as a signal-7F. The sampling width for Fourier transform is not particularly limited. As the sampling width decreases, the detection speed increases, although the number of detection points decreases. Consequently, the detection accuracy tends to decrease.

In the signal-6F from the touched electrode, a strong signal derived from a pressing force is observed in a commercial power supply frequency band (50 Hz). On the other hand, in the signal-7F from the electrode that is not touched, the signal is not observed in the commercial power supply frequency band. Therefore, it can be understood that the presence or absence of a touch on the electrode can be determined by appropriately setting the threshold for the intensities (set to 300 in FIG. 10B).

### Effects of Embodiment

The touch sensor 20 included in the display device 1 according to an embodiment of the present invention includes the first detection conductor 203, the second detection conductor 205, the signal processing unit 404, the controller 405. The first detection conductor 203 is made up of divided electrodes having a plurality of electrode portions electrically insulated from each other. The second detection conductor 205 is insulated from the first detection conductor 203 or is connected to the first detection conductor 203 with high impedance with a resistance equal to or higher than 10 kΩ. The signal processing unit 404 and the controller 405 extract a signal (hum noise) in the commercial power supply frequency band from the signal detected from the first detection conductor 203 with the second detection conductor 205 used as a reference potential. The signal processing unit 404 and the controller 405 detect a touch position on the touch sensor 20 using the extracted signal in the commercial power supply frequency band.

With the above configuration, it is not necessary to apply an alternating current voltage, and the configuration is very simple. Therefore, it is possible to reduce the size (thickness), and it is possible to perform touch position detection at low cost and with low power consumption. In addition, since the position detection is performed using the divided electrodes, it is possible to accurately detect a weak signal of hum noise, and it is possible to accurately detect the position while the position detection is not affected by the non-uniformity of the detection conductor or the individual differences.

### Summary of Embodiment

A touch sensor according to an aspect of the present invention includes: a first detection conductor made up of divided electrodes having a plurality of electrode portions electrically insulated from each other; a second detection conductor insulated from the first detection conductor or connected to the first detection conductor with high impedance with a resistance equal to or higher than 10 kΩ; and a control unit configured to extract a signal in a commercial power supply frequency band from a signal detected from the first detection conductor with the second detection conductor used as a reference potential, and detect a touch position using the signal in the commercial power supply frequency band.

In one example, the control unit is configured to calculate an envelope signal of the signal in the commercial power supply frequency band, and when a value of the envelope signal exceeds a threshold value, detect a position of a corresponding one of the divided electrodes to the envelope signal as the touch position.

In one example, the first detection conductor is disposed closer to a surface of the touch sensor than the second detection conductor, the surface being touched by a finger.

In one example, the control unit is configured to extract, from the signal, a signal in the commercial power supply frequency band using a band pass filter configured to pass the commercial power supply frequency band.

In one example, the control unit is configured to extract, from the signal, a signal in the commercial power supply frequency band using a band stop filter configured to pass a frequency band other than the commercial power supply frequency band.

In one example, a total light transmittance of a stacked body of the touch sensor is 80% or more, the stacked body including the first detection conductor and the second detection conductor.

A display device according to an aspect of the present invention includes: the touch sensor; a display panel overlapping a surface of the stacked body, the surface being disposed on a side opposite to a surface of the touch sensor, the surface being touched by a finger, the display panel being configured to display an image; and a drive unit configured to drive the display panel.

According to an aspect of the present invention, a touch sensor that is manufactured at low cost and driven with low power consumption can be provided.

Although the embodiments have been described above with reference to the drawings, the present invention is not limited to the above examples. It will be apparent to those skilled in the art that various modifications and variations can be made within the scope of the appended claims. It is understood that these modifications and variations also belong to the technical scope of the present invention. In addition, the components in the embodiments may be optionally combined without departing from the spirit of the present invention.

The present application is based upon and claims the benefit of priority from JP 2023-070741, filed on April 24, 2023. The contents described in the specification and the drawings of the present application are all incorporated herein by reference.

### [INDUSTRIAL APPLICABILITY]

An aspect of the present invention is suitable for a touch sensor.

### [REFERENCE SIGNS LIST]

1 Display device
10 Housing
20 Touch sensor
201 Protective film
202 Base material
203 First detection conductor
204 Insulating film
205 Second detection conductor
206 Base material (insulating film)
30 Display panel
40 Circuit
401 Amplification unit
402 Multiplexer
403 AD conversion unit
404 Signal processing unit
405 Controller

## Claims

1. A touch sensor comprising:
a first detection conductor made up of divided electrodes having a plurality of electrode portions electrically insulated from each other;
a second detection conductor insulated from the first detection conductor or connected to the first detection conductor with high impedance with a resistance equal to or higher than 10 kΩ; and
a control unit configured to extract a signal in a commercial power supply frequency band from a signal detected from the first detection conductor with the second detection conductor used as a reference potential, and detect a touch position using the signal in the commercial power supply frequency band.

2. The touch sensor according to claim 1, wherein
the control unit is configured to calculate an envelope signal of the signal in the commercial power supply frequency band, and when a value of the envelope signal exceeds a threshold value, detect a position of a corresponding one of the divided electrodes to the envelope signal as the touch position.

3. The touch sensor according to claim 1 or 2, wherein
the first detection conductor is disposed closer to a surface of the touch sensor than the second detection conductor, the surface being touched by a finger.

4. The touch sensor according to any one of claims 1 to 3, wherein
the control unit is configured to extract, from the signal, a signal in the commercial power supply frequency band using a band pass filter configured to pass the commercial power supply frequency band.

5. The touch sensor according to any one of claims 1 to 3, wherein
the control unit is configured to extract, from the signal, a signal in the commercial power supply frequency band using a band stop filter configured to pass a frequency band other than the commercial power supply frequency band.

6. The touch sensor according to any one of claims 1 to 5, wherein
a total light transmittance of a stacked body of the touch sensor is 80% or more, the stacked body including the first detection conductor and the second detection conductor.

7. A display device comprising:
the touch sensor described in claim 6;
a display panel overlapping a surface of the stacked body, the surface being disposed on a side opposite to a surface of the touch sensor, the surface being touched by a finger, the display panel being configured to display an image; and
a drive unit configured to drive the display panel.
